# EUROPÄISCHE PATENTANMELDUNG

(11) **EP 1 935 713 A1**
(43) Veröffentlichungstag der Anmeldung: **25.06.2008**
(21) Anmeldenummer: 07450149.5
(22) Anmeldetag: 30.08.2007
(51) Int. Cl.: B60P 7/135

(54) **Einrichtung zur seitlichen Abstützung von auf Transportfahrzeugen befindlichen Gütern**

(30) Priorität: 20.12.2006 AT 21002006
(71) Anmelder: Deutschmann, Otmar W., 4470 Enns (AT)
(72) Erfinder: Deutschmann, Otmar W., 4470 Enns (AT)
(74) Vertreter: Atzwanger, Richard

(57) **Zusammenfassung**

Einrichtung zur seitlichen Abstützung von auf Ladeflächen (11) von Transportfahrzeugen (1) befindlichen Gütern (2), um deren Lageveränderungen zu verhindern, mit längs der Seitenwände (13) der Transportfahrzeuge (1) angeordneten Halteleisten (4). Dabei sind zumindest einige der Halteleisten [4] mit mindestens einer dieser gegenüber beweglichen Abstützleiste (6) ausgebildet, wobei die mindestens eine Abstützleiste [6] mittels einer Stelleinrichtung (5) gegenüber der Halteleiste (4) auf unterschiedliche Abstände einstellbar ist, wodurch sie an die Güter (2) zur Anlage gebracht wird.

## Beschreibung

Die gegenständliche Erfindung betrifft eine Einrichtung zur seitlichen Abstützung von auf Ladeflächen von Transportfahrzeugen befindlichen Gütern, um deren Lageveränderungen zu verhindern, mit längs der Seitenwände der Transportfahrzeuge angeordneten Halteleisten.

Der Transport von Gütern erfolgt vorzugsweise dadurch, dass die Güter auf Paletten angeordnet und an diesen befestigt werden. Das genormte Maß von Paletten beträgt 80 cm x 120 cm. Da einerseits die auf den Paletten befindlichen Güter nicht immer solche Abmessungen aufweisen, dass die Paletten über ihre gesamte Tragfläche beladen sind und da andererseits die Güter beliebige räumliche Ausbildungen aufweisen, befinden sich die Güter von den Stirnflächen der Paletten in unregelmäßigen seitlichen Abständen.

Im Transportwesen besteht die Vorschrift, dass sich die von Paletten getragenen Güter von den Seitenwänden der Transportfahrzeuge nur in solchen Abständen befinden, welche das Ausmaß von 3 cm nicht übersteigen. Sofern demgegenüber größere Abstände auftreten, müssen die auf den Paletten befindlichen Güter gegenüber den an den vertikalen Seitenwänden der Transportfahrzeuge befindlichen Halteleisten gesichert sein. Sobald Transportfahrzeuge mit auf Paletten befindlichen Gütern beladen werden, besteht somit das Erfordernis, Überprüfungen dahingehend vorzunehmen, ob die Abstände der auf den Paletten befindlichen Güter von den seitlichen Halteleisten des Transportfahrzeuges nicht größer als 3 cm sind. Sofern dabei die Abstände mehr als 3 cm betragen, müssen die Güter mittels Gurten oder mittels zwischen diese und die seitlichen Tragleisten eingesetzter Abstandhalter gegenüber seitlichen Verschiebungen und Verlagerungen gesichert werden. Die hierfür erforderlichen Maßnahmen bedingen somit aufwendige und dadurch zeitraubende Manipulationen, wobei zu berücksichtigen ist, dass diese Manipulationen sowohl beim Ladevorgang als auch beim Entladevorgang vorgenommen werden müssen. Der gegenständlichen Erfindung liegt somit die Aufgabe zugrunde, eine Einrichtung zu schaffen, durch welche in einfacher Weise die erforderliche seitliche Abstützung von auf Paletten befindlichen Gütern bewirkt wird.

Diese Aufgabe wird erfindungsgemäß dadurch gelöst, dass zumindest einige der Halteleisten mit mindestens einer dieser gegenüber beweglichen Abstützleiste ausgebildet sind, wobei die mindestens eine Abstützleiste mittels einer Stelleinrichtung gegenüber der Halteleiste auf unterschiedliche Abstände einstellbar ist, wodurch sie an die Güter zur Anlage gebracht wird.

Vorzugsweise ist die mindestens eine Abstützleiste mittels Stellhebel an der Halteleiste gegenüber dieser verstellbar gelagert. Dabei kann jede Halteleiste mit mindestens einem Paar von Stellhebeln ausgebildet sein, wobei jeweils ein erster Stellhebel an der Halteleiste verschwenkbar gelagert ist und der jeweils zweite Stellhebel an mindestens einer längs der Halteleiste verstellbaren Rolle bzw. an einem Schlitten gelagert ist und mittels mindestens der einen Rolle bzw. des Schlittens längs der Halteleiste verstellbar ist.

Nach einer bevorzugten Ausführungsvariante ist jede Halteleiste mit mindestens einem Paar von Stellhebeln ausgebildet, wobei jeweils ein erster Stellhebel an der Halteleiste verschwenkbar gelagert ist und der jeweils zweite Stellhebel an einer Rastleiste gelagert ist, welche mittels eines Zugelementes längs der Halteleiste verstellbar ist.

Vorzugsweise ist die mindestens eine Rolle, der Schlitten bzw. die Rastleiste längs der Halteleiste mittels des Zugelementes und eines Ratschengesperres verstellbar. Weiters ist die mindestens eine Abstützleiste in einer zumindest angenähert horizontalen Ebene verstellbar.

Der Gegenstand der Erfindung ist nachstehend anhand eines in der Zeichnung dargestellten Ausführungsbeispieles näher erläutert. Es zeigen:
- Fig. 1: ein Transportfahrzeug mit auf diesem angeordneten, mit Gütern versehenen Paletten, in Fahrtrichtung gesehen;
- Fig.2, Fig.2a: eine erfindungsgemäße Einrichtung in ihrer Betriebsstellung und in ihrer Außerbetriebsstellung, jeweils in Draufsicht;
- Fig.3, 3a: die Einrichtung gemäß den Fig.2 und Fig.2a, in Stirnansicht gesehen; sowie
- Fig.4, Fig.4a: eine Ausführungsvariante einer erfindungsgemäßen Einrichtung, in zwei unterschiedlichen Betriebsstellungen, jeweils in Draufsicht.

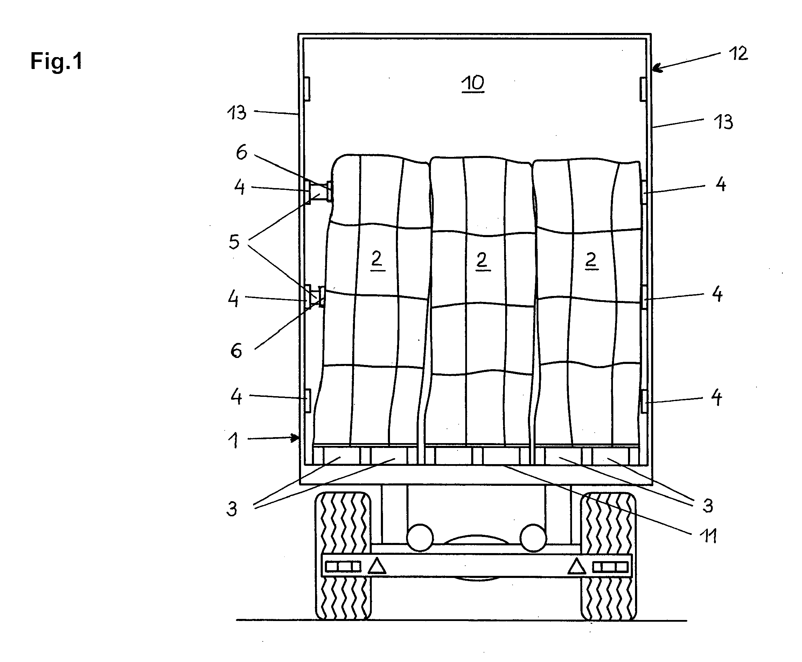

In Fig.1 ist ein Transportfahrzeug 1 dargestellt, in dessen Laderaum 10 sich drei mit Gutem 2 beladene Paletten 3 befinden, wobei die Paletten 3 auf die Ladefläche 11 aufliegen. Das Transportfahrzeug 1 ist mit einem Gehäuse 12 versehen, dessen Seitenwände 13 mit zumindest angenähert horizontal ausgerichteten Halteleisten 4 ausgebildet sind. Anstelle der Seitenwände 13 können auch vertikale Steher vorgesehen sein, an welchen die Halteleisten 4 befestigt sind.

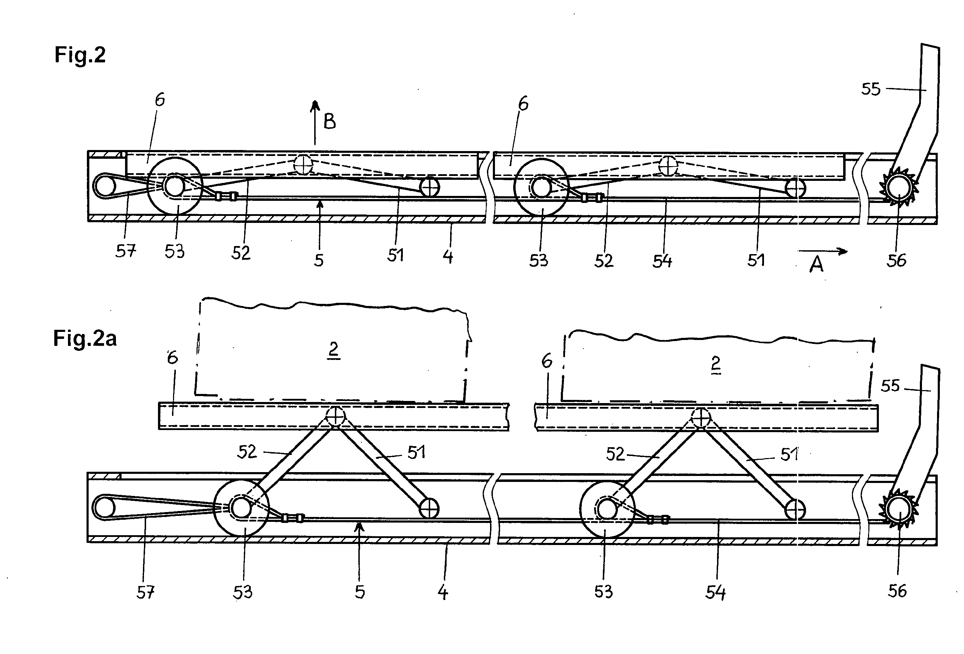

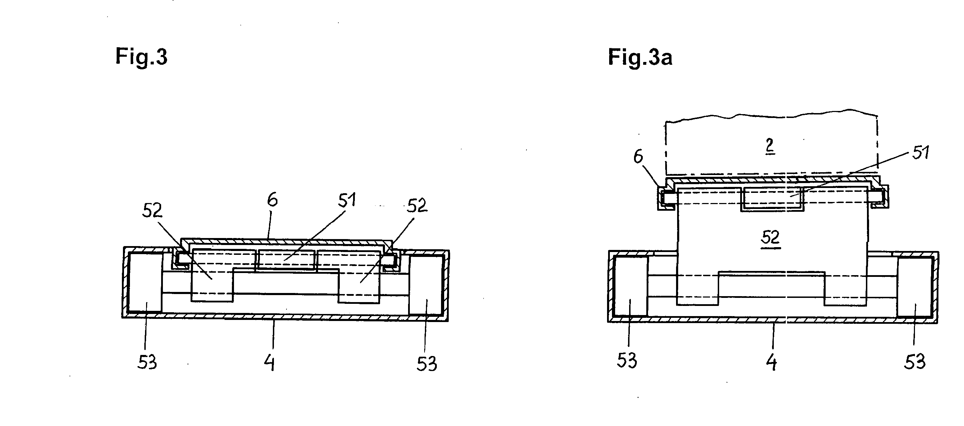

Wie dies in Fig.1 dargestellt ist, liegen die Güter 2 an die rechten Halteleisten 4 des Laderaumes 10 unmittelbar an, wodurch sie gegenüber seitlichen Verschiebungen gesichert sind. Demgegenüber befinden sich an der linken Seite des Laderaumes 10 die Güter 2 von den Halteleisten 4 in unterschiedlich großen Abständen. Sofern diese Abstände das Ausmaß von 3 cm überschreiten, besteht das Erfordernis, die Güter 2 gegenüber seitlichen Verschiebungen abzusichern.
Wie dies aus Fig.1 weiters ersichtlich ist, sind hierfür die Halteleisten 4 mit Stelleinrichtungen 5 und mit Abstützleisten 6 ausgebildet, welche nachstehend anhand der Fig.2, Fig.2a, Fig.3 und Fig. 3a näher erläutert sind.

Die Halteleiste 4 ist als im Querschnitt U-förmig profilierte Leiste ausgebildet, innerhalb welcher sich in der Außerbetriebsstellung mindestens eine Abstützleiste 6 befindet, welche mittels der Stelleinrichtung 5 gegenüber der Halteleiste 4 aus der Außerbetriebsstellung in unterschiedliche Betriebsstellungen verstellbar ist, wodurch die Abstützleiste 6 an die Güter 2 zur seitlichen Anlage gebracht werden kann. Eine dieser Betriebsstellungen ist in Fig.2a dargestellt. Die Stelleinrichtung 5 ist mit einem Paar von Stellhebeln 51 und 52 ausgebildet, durch deren Verschwenkung die an diese angelenkte Abstützleiste 6 gegenüber der Halteleiste 4 verstellbar ist.

Der jeweils erste Stellhebel 51 ist mit einem seiner beiden Enden an der Halteleiste 4 verschwenkbar gelagert. Der jeweils zweite Stellhebel 52 ist mit einem seiner beiden Enden an einem Paar von Rollen 53 gelagert, welche längs der Halteleiste 4 verfahrbar sind. An die beiden anderen Enden der beiden Stellhebel 51 und 52 ist die Abstützleiste 6 angelenkt. An den Rollen 53 ist ein Zugelement 54 befestigt, welches mittels eines durch einen Ratschenhebel 55 betätigbaren Ratschengesperres 56 entgegen der Wirkung einer Rückstellfeder 57 in Richtung des Pfeiles A verstellbar ist. Anstelle der Rollen 53 können auch Schlitten vorgesehen sein.

Durch eine Spannung des Zugelementes 54 werden die Rollen 53 in Richtung des Pfeiles A verstellt, wodurch sich der von den beiden Stellhebeln 51 und 52 eingeschlossene Winkel verkleinert und die Abstützleiste 6 in Richtung des Pfeiles B an die Güter 2 zur Anlage gebracht wird, wodurch diese in ihrer seitlichen Lage auf der Ladefläche 11 des Transportfahrzeuges 1 gehalten werden. Sobald das Ratschengesperre 56 gelöst wird, werden die Rollen 53 unter Wirkung der Rückstellfeder 57 entgegen der Richtung des Pfeiles A zurückverstellt, wodurch die Abstützleisten 6 von den Gütern 2 abgehoben werden und in ihre in den Fig.2 und Fig.3 dargestellte Außerbetriebsstellung zurückverstellt werden.

Längs einer Halteleiste 4 können mehrere voneinander getrennte Abstützleisten 6 vorgesehen sein. Weiters sind jeder Abstützleiste 6 mindestens zwei Paare von Stellhebeln 51 und 52 zugeordnet. Anstelle der Rollenpaare 53 können auch Schlitten, welche längs der Halteleiste 4 verschiebbar sind, vorgesehen sein. Bei dem in den Fig.2, Fig.2a, Fig.3 und Fig.3a dargestellten Ausführungsbeispiel werden die Abstützleisten 6 durch das Zugelement 54 jeweils im gleichen Ausmaß gegenüber der Halteleiste 4 verstellt.

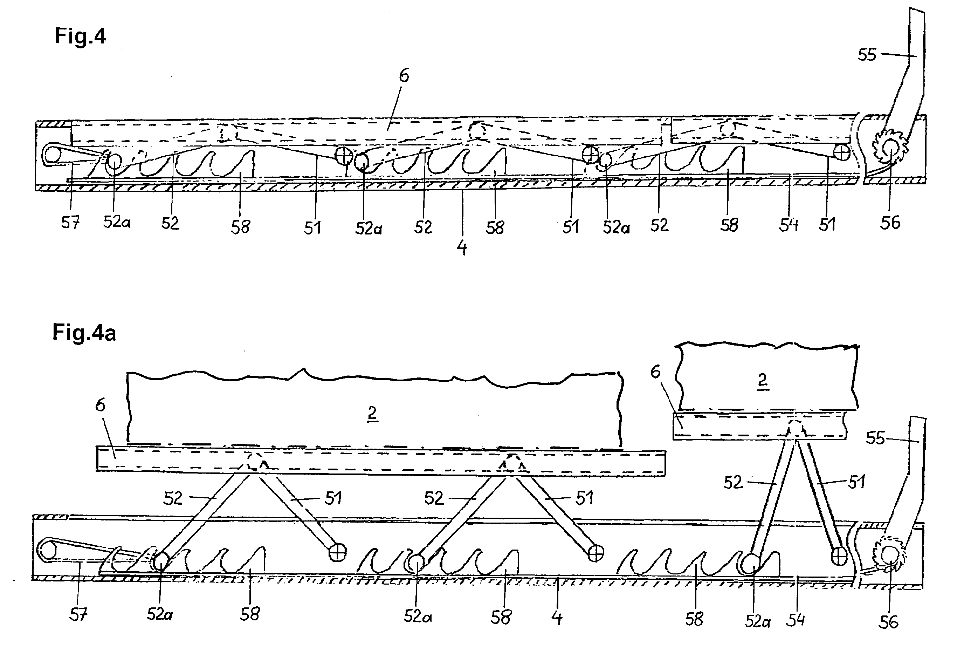

In den Fig.4 und Fig.4a ist eine Ausführungsvariante dargestellt, durch welche die einzelnen längs der Halteleiste 4 vorgesehenen Abstützleisten 6 gegenüber der Halteleiste 4 in unterschiedlichen Ausmaßen verstellbar sind, wodurch eine Anpassung in der Abstützung an von der Halteleiste 4 in unterschiedlichen Abständen befindliche Güter 2 ermöglicht wird.

Bei dieser Ausführungsvariante sind längs der Halteleiste 4 verschiebbare Rastleisten 58 vorgesehen, in welche die zweiten Stellhebel 52 mittels Lagerzapfen 52a an unterschiedlichen Stellen einsetzbar sind. Hierdurch kann eine Voreinstellung der Winkellage der beiden Stellhebel 51 und 52 vorgenommen werden, durch welche eine erste Verstellung der Abstützleisten 6 erfolgt. Sobald dann mittels des Zugelementes 54 die Rastleisten 58 entgegen der Wirkung der Rückstellfeder 57 verschoben werden, werden die Abstützleisten 6 in von der Halteleiste 4 unterschiedlichen Abständen an die Güter 2 zur Anlage gebracht.

Durch eine derartige Einrichtung kann den Erfordernissen auf seitliche Abstützung von in Transportfahrzeugen befindlichen Gütern in sehr wirkungsvoller und einfacher Weise entsprochen werden.

## Patentansprüche

1. Einrichtung zur seitlichen Abstützung von auf Ladeflächen (11) von Transportfahrzeugen (1) befindlichen Gütern (2), um deren Lageveränderungen zu verhindern, mit längs der Seitenwände (13) der Transportfahrzeuge (1) angeordneten Halteleisten (4), **dadurch gekennzeichnet, dass** zumindest einige der Halteleisten (4) mit mindestens einer dieser gegenüber beweglichen Abstützleiste (6) ausgebildet sind, wobei die mindestens eine Abstützleiste (6) mittels einer Stelleinrichtung [5] gegenüber der Halteleiste (4) auf unterschiedliche Abstände einstellbar ist, wodurch sie an die Güter (2) zur Anlage gebracht wird.

2. Einrichtung nach Patentansprüche 1, **dadurch gekennzeichnet, dass** die mindestens eine Abstützleiste (6) mittels Stellhebeln (51, 52) an der Halteleiste (4) gegenüber dieser verstellbar gelagert ist.

3. Einrichtung nach Patentanspruch 2, **dadurch gekennzeichnet, dass** jede Halteleiste (4) mit mindestens einem Paar von Stellhebeln (51, 52) ausgebildet ist, wobei jeweils ein erster Stellhebel [51] an der Halteleiste (4) verschwenkbar gelagert ist und der jeweils zweite Stellhebel (52) an mindestens einer längs der Halteleiste (4) verstellbaren Rolle (53) bzw. an einem Schlitten gelagert ist und mittels der mindestenn einer Rolle (53) bzw. des Schlittens längs der Halteleiste (4) verstellbar ist.

4. Einrichtung nach einem der Patentansprüche 1 bis 3, **dadurch gekennzeichnet, dass** jede Halteleiste (4) mit mindestens einem Paar von Stellhebeln (51, 52) ausgebildet ist, wobei jeweils ein erster Stellhebel (51) an der Halteleiste (4) verschwenkbar gelagert ist und der jeweils zweite Stellhebel (52) an einer Rastleiste (58) gelagert ist, welche mittels eines Zugelementes (54) längs der Halteleiste (4) verstellbar ist.

5. Einrichtung nach eine der Patentansprüche 1 bis 4, **dadurch gekennzeichnet, dass** die mindestens eine Rolle (53), der Schlitten bzw. die Rastleiste (58) mittels eines Zugelementes (54) längs der Halteleiste (4) verstellbar ist.

6. Einrichtung nach Patentanspruch 5, **dadurch gekennzeichnet, dass** die mindestens eine Rolle [53], der Schieber bzw. die Rastleiste (58) mittels des Zugelementes (54) und eines Ratschengesperres (55, 56) verstellbar ist.

7. Einrichtung nach einem der Patentansprüche 1 bis 6, **dadurch gekennzeichnet, dass** die mindestens eine Abstützleiste (6) in einer zumindest angenähert horizontalen Ebene verstellbar ist.
